# EUROPEAN PATENT SPECIFICATION

(11) **EP 4 404 757 B1**
(45) Date of publication and mention of the grant of the patent: **17.06.2026**
(21) Application number: 22777652.3
(22) Date of filing: 22.09.2022
(51) Int. Cl.: A23L 2/39, A23C 11/08, A23F 5/40, A23L 2/52, A23L 29/244

(54) **A NON-FAT CREAMER POWDER, AND A METHOD OF MAKING THE SAME**
FETTFREIES KAFFEEWEISSERPULVER UND VERFAHREN ZUR HERSTELLUNG DAVON
POUDRE DE SUCCÉDANÉ DE CRÈME SANS MATIÈRE GRASSE ET PROCÉDÉ DE FABRICATION DE CELLE-CI

(30) Priority: 22.09.2021 GB 202113481
(43) Date of publication of application: 31.07.2024
(73) Proprietor: Koninklijke Douwe Egberts B.V., 3532 AD Utrecht (NL)
(72) Inventor: HARRIS, Gayle, 3532 AD Utrecht (NL); SAVILLE, Lauren Amy, Banbury Oxfordshire OX16 2QU (GB); FOURIE, Blythe Frances, Banbury Oxfordshire OX16 2QU (GB)
(74) Representative: Boult Wade Tennant LLP
(86) International application number: PCT/EP2022/076397
(87) International publication number: WO 2023/046845

(56) References cited:
- EP-A1- 0 821 885
- US-A1- 2016 374 360
- HEDAYATNIA SIMIN ET AL: "Effect of different fat replacers and drying methods on thermal behaviour, morphology and sensory attributes of reduced-fat coffee creamer", LWT- FOOD SCIENCE AND TECHNOLOGY, ACADEMIC PRESS, UNITED KINGDOM, vol. 72, 3 May 2016 (2016-05-03), pages 330 - 342, XP029561956, ISSN: 0023-6438, DOI: 10.1016/J.LWT.2016.05.008
- DATABASE GNPD [online] MINTEL; 1 October 2013 (2013-10-01), ANONYMOUS: "Coffee Creamer", XP093000707, retrieved from https://www.gnpd.com/sinatra/recordpage/2184300/ Database accession no. 2184300

## Description

The invention relates to a non-fat creamer powder for use in a beverage, wherein the composition comprises 5 to 15 wt.% of hydrothermally treated long chain fibre inulin and 5 to 20 wt.% micellar casein, with the balance comprising sweetening and/or bulking agents. In particular, it relates to a non-fat creamer powder that is free from glucose and/or other conventional creamer stabilisers and ingredients. The invention also relates to a method for making a non-fat creamer powder, a coffee beverage powder comprising the non-fat creamer powder, and the use of the non-fat creamer powder for forming a whitened beverage on reconstitution in water.

Creamers are added to beverages to provide creaminess and whitening, thus serving as a milk substitute. They are used predominantly in coffee, but can also be used in beverages such as tea and hot chocolate. They are most commonly provided in powder form, to be reconstituted upon addition of water, but they can also be provided in a concentrated liquid form, such as in a small sachet, for addition to the rest of a beverage. A typical creamer comprises a fat component, a protein, a bulking agent which is usually a sugar (e.g. glucose syrup, sucrose, or dextrose) and optionally a stabilising system (such as emulsifiers and/or buffer salts). A common commercial creamer composition currently in use is Coffee Mate^{™}.

For several years now, there has been a consumer-driven desire for beverages to be as low in calories as possible, which includes being as low in sugar and as low in fat as possible. Lattes, cappuccinos, and coffees with cream or whole milk have a significant number of calories and amount of fat due to the milk present. The same desire is being sought for instant drinks (i.e. those in powder form which are reconstituted with water e.g. from a kettle).

However, although the consumer desires their beverages to be as low in calories as possible, the same amount of whitening and the same creamy and sweet taste is still desired. There is also a desire for the ingredients that substitute the fat and sugar components of cream/milk to be 'clean-label'. In general, consumers are increasingly aware of the concept of 'clean label' and what it means to shop 'clean', despite these typically being industry terms.

EP 1042960 describes a low-fat cappuccino-foaming creamer comprising protein, lipid and carrier, wherein more than 50% by weight of said protein is whey protein that is from 40 to 90% denatured, and further comprising (basic) chemical carbonation reagents. The lipid component can be a dairy or non-dairy fat.

EP 2725917 describes a creamer or whitener composition, wherein the particles comprise fat, carbohydrate, whey protein and an acidulant, that is stable towards acid, and which do not contain inorganic phosphates.

Consumers prefer products to have ingredients that sound more natural and less processed. Therefore, ingredients that sound artificial, or those denoted by an E-number, often elicit a negative response, regardless of whether they are artificial or naturally sourced. As a result, there is a need to provide creamer compositions that are low in fat, can provide appropriate whitening, and that contain natural, clean label alternatives.

HEDAYATNIA SIMIN ET AL: "Effect of different fat replacers and drying methods on thermal behaviour, morphology and sensory attributes of reduced-fat coffee creamer", LWT- FOOD SCIENCE AND TECHNOLOGY, ACADEMIC PRESS, UNITED KINGDOM, vol. 72, 3 May 2016 (2016-05-03), pages 330-342, relates to the effects of different fat replacers and agglomeration process on the characteristics of a reduced-fat coffee creamer.

EP 0821 885 A1 relates to fructan- and/or polydextrose-containing dairy powders, a process for preparing the same and their use.

US 2016/374360 A1 relates to micellar casein for coffee creamers and other dairy products.

DATABASE GND [Online] MINTEL; 1 October 2013 (2013-10-01), anonymous: "Coffee Creamer" relates to a coffee creamer containing added dietary fibre.

In a first aspect of the invention, there is provided a non-fat creamer powder according to claim 1.

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

A creamer powder refers to a powder composition that can be added to beverages to provide creaminess and whitening, thus serving as a milk substitute, as described above.

The term "non-fat" used to define the creamer powder means that the creamer powder has less than 1 wt.% of fat, preferably less than 0.5 wt.% fat, and more preferably less than 0.2 wt.% fat. The fat source generally incorporated into most commercial creamers (i.e. those that contain fat) includes fats derived from dairy origins (i.e. milk), as well as those from other non-dairy sources such as coconut oil, cocoa butter, palm oil, palm kernel oil, olive oil, grapeseed oil, sunflower oil, and rapeseed oil. The creamer powder is preferably free from any of these fats. Trace amounts of fat may be provided by ingredients such as corn syrup, but preferably no fat is intentionally added to the mixture used to form the powder.

The creamer powder contains 5 to 15wt% of hydrothermally treated long chain fibre inulin having a chain length of from 14 to 60. Weight percent (wt%) refers to the weight of the dry creamer powder. By dry it is meant that it contains less than 3 wt.% water, more preferably less than 2wt% and more preferably less than 1wt%. Preferably, the creamer powder comprises 7 to 13 wt%, or 9 to 11wt.%, and most preferably about 10 wt.% of hydrothermally long chain inulin having a chain length of 14 to 60.

Inulin is a storage carbohydrate found in many plants. However, it is normally commercially extracted from chicory root for use as a functional food ingredient. Inulin belongs to a class of dietary fibres known as Fructans, and has a high presence of fructose units joined by fructosyl-fructose bonds, specifically β(2,1) linkages. It is this linkage that makes inulin undigestible by digestive enzymes in the body, thus contributing to its functionality as a dietary fibre source with reduced caloric value and prebiotic effects. The number of fructose units, otherwise known as the degree of polymerisation (DP) in chicory inulin can vary from 2 to 60. This range of 2 to 60 encompasses both long and short chain inulin. The average DP of a particular inulin influences its functionality. Both forms (i.e. long and short chain fibres) of chicory inulin have a neutral taste and can be successfully employed as bulking agents to improve mouthfeel. Long chain inulin fibres refers to those with chain lengths of 14 to 60.

With regard to the solubility of inulin, the increase in DP negatively correlates to solubility (i.e. longer chain inulin has poorer solubility compared to short chain inulin). The solubility can be increased by the use of heat, however at high solubility the solution may become too viscous to process, and so the level of solubility must be optimised.

The solubility of Inulin is crucial for gel formations, at minimum concentrations (i.e. >25wt.% for short chain inulin and >15wt.% for long-chain (in water)), a particle gel network is formed. This gives rise to complex rheological properties which can be manipulated in order to mimic a fat droplet network within an emulsion system and in turn facilitate fat reduction (i.e. by acting as a fat replacement). The gel particles formed by the long chain inulin have a size between 1 and 3 µm which is very similar to the size of fat droplets after homogenisation. Thus, these particles can mimic the mouthfeel and creaminess of fat within emulsion systems.

The long chain inulin is hydrothermally treated. Hydrothermal treatment of long chain inulin is done by heating the long chain inulin fibres with water for a sufficient time and at a temperature sufficient to hydrolyse the long chain fibres such that a gel is formed. The inulin solutions form the gels after hydrothermal treatment. The long chain inulin and water is generally mixed to aid the gelling process. Shear may also be applied to the mixture during the step of heating with water. Thus, hydrothermally treated long chain inulin is long chain inulin in the form of a gel.

The concentration of solubilised inulin, the process temperature and the applied shear (if any) all influence the gel particles characteristics. The higher the temperature, the higher the concentration of inulin, the higher the number of inulin gel particles (up to 80°C), and therefore the creamier the product. However, this also increases the viscosity of the slurry and thus poses a potential challenge for processing and spray drying. At a temperature of 80°C or above, gel formation reduces due to partial hydrolysis of long chains into shorter chains thus reducing the gel formation ability. Intermediate temperatures of 60-70°C were found to be the most successful in terms of forming a gel.

The strength of the inulin gels formed depends on a wide range of parameters such as processing temperature, concentration, total solids content and shearing parameters. It is important to also note that a pH between 4 and 9 has no known impact. A significant parameter affecting gel strength is the dry solids content of the system. Increasing the dry solids content by either increasing inulin concentration, or by adding other ingredients such as sugars can lead to much higher gel strengths. A higher shear rate results in a gel of higher firmness than that produced under low shear. As a result, lower inulin concentrations can be used to obtain gels.

Higher shearing also aids with better dispersion of the inulin particles which results in a smoother gel texture than gels formed at lower shear rates. In terms of rheometry, the gels are viscoelastic, so possesses both solid-like properties (gel strength), and fluid-like properties (viscosity). This is important in consideration of spray drying, as a viscoelasticity that is too high will mean that the slurry will make it challenging for the pump to maintain the correct flow rate to feed the slurry into the chamber for atomisation (inlet feed rate).

The powder creamer also comprises 5 to 20wt% micellar casein. Preferably, the powder creamer comprises micellar casein in an amount of from 7 to 18 wt.%, or from 9 to 16 wt.%, or from 11 to 14 wt.%, or most preferably about 12 wt.%. The structure of casein is defined as a phosphorus containing milk protein that will coagulate or precipitate at pH 4.6. It has a relatively open structure due to the arrangement of amino acids and forms calcium phosphate salts due to its high proline content. 'Micellar' refers to the casein complex in the form in which it is natively found when suspended in milk. Casein subunits α-s1, α-s2 and ß are internally held together by calcium phosphate bridges and surrounded by a layer of K-casein. The K-casein gives the micelle a negative net charge and sterically stabilizes the micelles against flocculation.

The centre of the micelle is hydrophobic while the rest of the micelle is soluble. The micelle is porous to allow interstitial water and hydration of the hydrophilic groups, while the hydrophobic centre repels water. This allows micellar casein to be suspended stably but does not interact with other ingredients or denature during processing or within cup. Micellar casein is generally heat stable but will form protein-protein interactions with other milk proteins that are less heat stable at temperatures higher than 85°C. The strong integrity of the micelle facilitates the recipe to not need stabilisers or buffering agents that carry E numbers. This means the recipe is clean label and therefore more attractive to consumers.

The purpose of micellar casein within the recipe is to act as a whitening agent. The micelle's diameter ranges from 50 to 600nm in diameter and average diameter is 200nm. The structure is of similar size and shape as coconut fat droplets in non-dairy creamers and this allows it to scatter light in the same manner. In current commercially-used creamers that contain fat, the fat refracts light to give the creamer its white and opaque appearance. In the present invention the micellar casein refracts light the same way fat does in a creamer system, therefore fat can be removed from the creamer.

Solmiko MPi (provided by Glanbia Nutritionals) is a source of miceullular casein that can be used in a creamer powder according to the present invention. It is an effective whitening agent and stable throughout processing and in cup. This is in comparison to other whitening agents: sodium caseinate, skimmed milk powder, rice starch and dairy minerals.

Solmiko MPi is: "A spray dried, milk protein isolate powder manufactured from fresh ultrafiltered skim milk. Solmiko MPI is a good source of native micellar casein and whey proteins in the same ratio as found naturally in milk." The main method for extracting micellar casein is through microfiltration. Milk is passed through a membrane and due to micellar casein's larger particle size it is not permeable, unlike the other constituents of milk such as whey protein.

The balance, which is anywhere from 65 to 90 wt.% of the powder composition, comprises sweetening and/or bulking agents. However, the balance may additionally comprise other components. Preferably the composition consists of the components and ingredients described herein.

Bulking agents comprise any suitable ingredient which increases the volume or weight of the powder creamer, while not affecting its utility and nutritional value. Bulking agents generally do not impact the flavour of the food stuff to which they are added, and also they do not have any calories. Exemplary bulking agents can be guar gum and psyllium husk.

Sweetening agents, are added to improve the taste of the creamer (i.e. by making it taste more sweet to the consumer), without increasing the fat content of the creamer powder.

It has been surprisingly found that a non-fat powder creamer according to the first aspect of the invention can advantageously replace fat-containing powder creamers, while maintaining a similar degree of whitening ability, sweetness, mouthfeel and texture. The composition also advantageously uses natural (i.e. clean-label) components to replace the fat and sugar components. While inulin has been used in other foodstuff, its use in a powder creamer in the claimed amount together with the claimed amount of micellar casein has proven to be surprisingly advantageous as a non-fat powder creamer, and overcoming the problems associated with the prior art.

The balance comprises 15 to 40wt%, by weight of the non-fat creamer powder, of short chain fibre inulin having a chain length (i.e. degree of polymerisation, DP) of from 10 to 12. More preferably, the balance comprises from 20 to 36, or from 25 to 35 wt.%, or from 28 to 32 wt.%, or most preferably about 30 wt.% of the short chain fibre inulin having a chain length of from 10 to 12.

Due to the shorter DP it brings about 10% of the sweetness of sucrose to the slurry. Short chain inulin has solubility of 120 g/l in water at 25°C and this is further improved by an increase in temperature, whereby a temperature of 90°C can result in a solubility of up to around 420 g inulin /litre water. However, as discussed for long chain inulin, at too high of a temperature, gelling will decrease. Short chain inulin is known to gel at concentrations above 25%, the gel particles sizes are the same size as fat droplets within non-dairy creamers and thus deliver comparable mouthfeel. A suitable short chain inulin sample is Orafti^{®} GR provided by Beneo, having an average DP of ≥ 10 and less than 12.

The balance comprises 20 to 50wt%, by weight of the non-fat creamer powder, of corn fibre syrup. More preferably, the balance comprises from 30 to 48, or from 35 to 45 wt.% of corn fibre syrup. Including corn fibre syrup into the non-fat creamer powder brings sweetness without increasing the calories or fat content drastically. It can be used at the same level as glucose syrup. It avoids impacting the nutritional content of the product as the majority of the ingredient is soluble fibres and a maximum limit of 0.5% sugars and 1% fat. Corn fibre syrup also acts as a bulking agent. It is a particularly preferred bulking agent as it adequately improves mouthfeel, is not very expensive to source, and does not contribute to viscosity.

The balance may comprise 2 to 20 wt.%, by weight of the non-fat creamer powder, of fructo-oligosaccharides (FOS). More preferably, the balance comprises from 10 to 20, or 12 to 18, or from 14 to 16, or more preferably about 15 wt.% of FOS. When the balance comprises both FOS and corn fibre syrup, it is preferable that the combination of these components is in an amount of from 40 to 55 wt.%. When there is no FOS present, it is preferable that the corn fibre syrup is present in an amount of from 43 to 48 wt.%.

Fructooligosaccharides (FOS; sometimes known as Oligofructose) are fructose units linked together by β-(2,1)-linkages and some of these chains are terminated by glucose units. The degree of polymerisation (DP) ranges from 2 to 8 and therefore delivers sweetness and taste to the product. It is extracted from chicory inulin using partial enzymatic hydrolysis. A suitable source of FOS is the product under the branded name of P95, which is supplied by Beneo. FOS can be incorporated into the powder creamer in relatively small amounts to increase sweetness, but is not an economically suitable option for use as a bulking agent due to its high price.

Incorporation of corn fibre syrup and FOS into the creamer in the indicated amounts advantageously allows the creamer powder to have less than 1 wt.%, and preferably 0 wt.% of sugar.

Preferably, the non-fat creamer powder further comprises oat starch and/or sodium caseinate.

When the non-fat creamer powder comprises oat starch, it is preferably present in an amount of from 3 to 15 wt.%, more preferably from 5 to 10 wt.%, and most preferably from 7 to 8 wt.%, by weight of the non-fat creamer powder. Furthermore, when the non-fat creamer powder comprises oat starch, the creamer powder preferably comprises FOS in an amount of from 2 to 6 wt.%.

The oat starch can be obtained from Glanbia Nutritionals under the product BevOat^{™}, which is a low viscosity oat starch product, designed to be incorporated into ready-to-drink beverages. Incorporating oat starch in an amount of from 3 to 15wt. % means that less FOS is used, and it also allows a lower amount of micellar casein to be used, such as from 8 to 12 wt.%, whilst maintaining good mouthfeel, taste, and whitening. Incorporating lower amounts of FOS and micellar casein, and instead incorporating some oat starch into the creamer powder, results in a reduction in the cost of the raw materials, meaning that a non-fat and sugar-free creamer powder can be produced more economically.

By (i) sodium caseinate, it is meant molecular sodium caseinate in isolation, not sodium caseinate in the form of a casein micelle. In particular, sodium caseinate results from casein micelles that have been dissociated into individual casein units due to, for example, an acidification process. Sodium caseinate is available under the product name Excellion EM7, from Friesland Campina.

When the non-fat creamer powder comprises sodium caseinate, the sodium caseinate is preferably present in an amount of from 1 to 8 wt.%, more preferably from 3 to 5 wt.%, and most preferably about 4 wt.%, by weight of the non-fat creamer powder. Incorporating sodium caseinate into the beverage allows a reduced amount of micellar casein to be used, such as from 5 to 10 wt.%, preferably from 5 to 7 wt.%, and most preferably about 6 wt.% micellar casein, by weight of the non-fat creamer powder.

Micellar casein has significant cost fluctuations, and so it is desirable to reduce the amount of micellar casein required to obtain the desired degree of whitening. Incorporation of sodium caseinate allows a reduction in the amount of micellar casein, whilst providing the creamer with a good sweet taste, good whitening capacity, and being more cost effective.

It is beneficial to use sodium caseinate and micellar casein together due to a variety of reasons. The two caseins have different structures. Micellar casein is globular in its natural form and sodium caseinate is linear. Due to the structural differences, micellar caseinate has superior whitening capacity, and sodium caseinate has increased stability and is more cost effective. Therefore, using the two in conjunction increases stability, maintains adequate whiteness, and reduces the impact of cost fluctuations of these ingredients. In addition, the creamer powder maintains good mouthfeel and taste.

The non-fat powder creamer is preferably free from:
(i) sodium caseinate; and/or
(ii) colours, preservatives and stabilisers; and/or
(iii) added fructose, sucrose or glucose.

Colours, preservatives and stabilisers suitable for use in creamers are all well known in the art, and many have been designated "E" numbers. Stabilisers can be in the form of acidity regulators, and include phosphates, citrates and carbonates. Stabilisers can also be in the form of emulsifiers, and include sodium stearyl lactylate, and mono & diglycerides. Exemplary colours include beta carotene and titanium dioxide.

Preferably, the non-fat powder creamer comprises less than 5 wt.% of additives. More preferably, the non-fat powder creamer comprises less than 3 wt.%, less than 2 wt.%, or less than 1 wt.% additives. Most preferably, the non-fat powder creamer is essentially free of additives (i.e. the creamer comprises about 0 wt.% additives).

In a further aspect of the invention, there is provided a coffee beverage powder comprising the non-fat creamer powder as described herein, and a coffee powder. The non-fat creamer powder as described above can be combined with a coffee powder, and may be, for example, placed in a sachet. The powder ingredients can then be reconstituted with water to form a coffee beverage that mimicks a freshly-made coffee with milk. The resulting coffee beverage has good mouthfeel, appropriate sweetness, and is of an appropriately light colour that mimicks a freshly made coffee with added milk.

In a further aspect of the invention, there is provided a method for the manufacture of a non-fat creamer powder, the method comprising:
(i) mixing together water and long chain fibre inulin having a chain length of from 14 to 60 at a temperature of from 50ºC to 70ºC for a time sufficient to at least partially swell the long chain fibre inulin and form a first mixture;
(ii) adding with mixing micellar casein to form a second mixture;
(iii) adding with mixing the balance comprising sweetening and/or bulking agents to form a third mixture; and
(iv) spray-drying the third mixture to form the non-fat creamer powder.

The first step (i) of mixing together water and long chain fibre inulin to partially swell the long chain fibre inulin results in a first mixture that is a gel. As described above, the gel particles formed by the long chain inulin have a size between 1 and 3 µm which is very similar to the size of fat droplets after homogenisation. Thus, these particles can mimic the mouthfeel and creaminess of fat within emulsion systems.

For step (i), a temperature of 50 to 70°C is used. More preferably, a temperature of 55 to 65°C is used. Long chain inulin can gel in this temperature range to create the optimum gel properties as part of the long chain fibres in the resulting gel are still solid and therefore increase gel strength and bring a degree of opacity.

Temperatures higher than 70°C, and particularly above 80°C, induce partial hydrolysis of the long chain inulin fibres, and temperatures below 50°C do not facilitate sufficient solubility. The viscosity is also reduced at the slightly elevated temperatures of 50 to 70°C, which is beneficial for ease of processing. A further benefit of using a temperature of 50 to 70°C, as opposed to higher temperatures above 70°C, is that less energy needed for processing, thus more economic and environmentally friendly.

Step (i) is performed with mixing as this activates the inulin gelation at particle sizes comparable to fat droplets and the product slurry will be uniform, resulting in an improved mouthfeel.

Step (ii) requires adding with mixing micellar casein to form a second mixture. The micellar casein is added after the long chain fibre inulin because the ingredients all compete for water and as a result a specific order must be implemented to prioritise water availability to long chain fibre and micellar casein, respectively. Long chain fibre requires water in order to gel and bring the majority of the mouthfeel and therefore it is crucial it is added first. Micellar casein needs to be hydrated in order to bring whiteness to the creamer, hence its priority as second ingredient added.

Step (iii) requires adding with mixing the balance comprising sweetening and/or bulking agents to form a third mixture. The long chain inulin and the micellar casein are the ingredients of priority for water absorption. The sweetening and/or bulking agents do not require so much water in order to perform their purpose of either sweetening the creamer (i.e. for the sweetening agents) or increasing the volume of the creamer (i.e. the bulking agents).

The final step (iv) requires spray-drying the third mixture to form the non-fat creamer powder. The mixture can be spray-dried straight after step (iii), or it can be held for a period of time, and sent to a different facility to be spray-dried. The spray drying conditions can be optimised through routine experimentation (i.e. to optimise the temperature and feed rate, as well as the size of the spray dryer) to ensure that the slurry droplets don't dry too rapidly within the column and cause the resultant particles structure to be crinkled instead of round and porous. Advantageously, since the creamer of the present invention is not an emulsion, there is no need to homogenise the mix before spray drying. Homogenisation is a common and necessary step in standard creamer production as all fat-containing creamers are typically emulsions. However, this step can advantageously be omitted in the method of the present invention.

The balance of the non-fat creamer powder may comprise short chain fibre inulin having a chain length of from 10 to 12, and corn fibre syrup. In this case, the method further comprises adding with mixing the short chain fibre inulin before adding with mixing the corn fibre syrup. As discussed above, the short chain fibre inulin brings some sweetness, but primarily mimics fat droplets and so adds to the mouthfeel of the resulting creamer. Corn fibre syrup brings some sweetness but is primarily a bulking agent to increase the mass or volume of food without affecting its nutritional value. It is preferable to add the short chain fibre inulin before adding the corn fibre syrup as the short chain inulin fibres can undergo some gelling as well as delivering sweetness, and so the short chain inulin is of a higher priority for use of the water in the mixture, compared to corn fibre syrup.

Preferably, the method is for the manufacture of the non-fat creamer powder of the first aspect of the invention.

Preferably, steps (ii) and (iii) are also both conducted at a temperature of from 50ºC to 70ºC. Maintaining such a constant temperature allows the long chain inulin to remain at optimum gelling conditions, and it is also better for energy consumption purposes to maintain a constant temperature, rather than adding additional heat, or adding a cooling step.

Step (i) and preferably steps (ii) and (iii) may be conducted at a temperature of about 60ºC. This temperature is the optimum temperature for processing, because long chain and any optional short chain inulin produce an optimal structure for their respective purposes. Long chain inulin can gel at this temperature to create the optimum gel properties as part of the long chain fibres would still be solid and therefore increase gel strength and bring a degree of opacity.

Preferably, the mixing is performed with a high-shear mixer. More preferably, the conditions include operating the mixer at 7000rpm, as this speed activates the inulin gelation at particle sizes comparable to fat droplets and the product slurry will be uniform, resulting in an improved mouthfeel. The high shearing provides a stable and uniform creamer.

Preferably, step (ii) and/or step (iii) further includes adding with mixing sodium caseinate and/or starch. When sodium caseinate is added to the mixture, it is preferably added in step (ii) together with the micellar casein.

When oat starch is added, it is preferably added in step (iii) together with the sweetening and/or bulking agents.

In a further aspect of the invention, there is provided the use of the non-fat creamer powder as described herein, for forming a whitened beverage on reconstitution in/with water. The non-fat powder creamer is useful for addition to beverages such as tea, coffee and hot chocolate, as it whitens the beverage, mimicking the action of milk, while having zero fat, and preferably zero glucose. It can be reconstituted either by addition of the creamer powder straight to the liquid beverage, or reconstitution of both powder beverage and creamer powder with water, or the creamer powder can be reconstituted with water separately, and then the creamer slurry can be added to the liquid beverage.

The invention is now further illustrated by way of figures 1 to 10, wherein:
- Each of Figures 1 to 7 shows a method of making a creamer powder in accordance with the invention.
- Figures 8a and 8b show the appearance of a reference creamer and an inventive creamer in slurry form.
- Figures 9a and 9b show the appearance of a coffee beverage containing a reference creamer and the inventive creamer.
- Figure 10 shows the average scores of a reference coffee beverage and an inventive coffee beverage for various properties.

### Detailed Description of the Invention

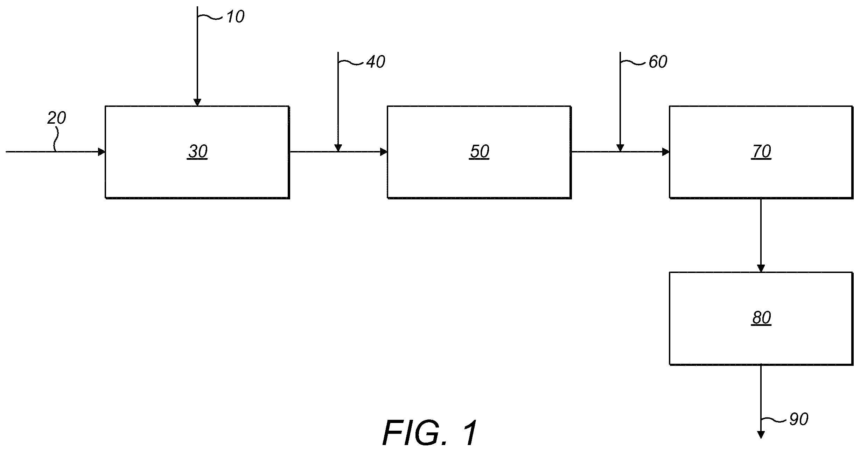

As shown in Figure 1, long chain inulin 10 and water 20 are combined and mixed in a thermomixer 30 at speed 3 for 10 minutes at 60°C. Micellar casein 40, purchased under the name of Solmiko MPI, is added to the Thermomixer 50 and mixed for a further 5 minutes at 60°C. Then, the remaining balance components, including sweetening and/or bulking agents 60 are added, and mixed in the thermomixer 70 for a further 10 minutes at 60°C. The resulting liquid creamer is then passed to a spray-drier 80 and is spray-dried to produce a creamer powder composition 90.

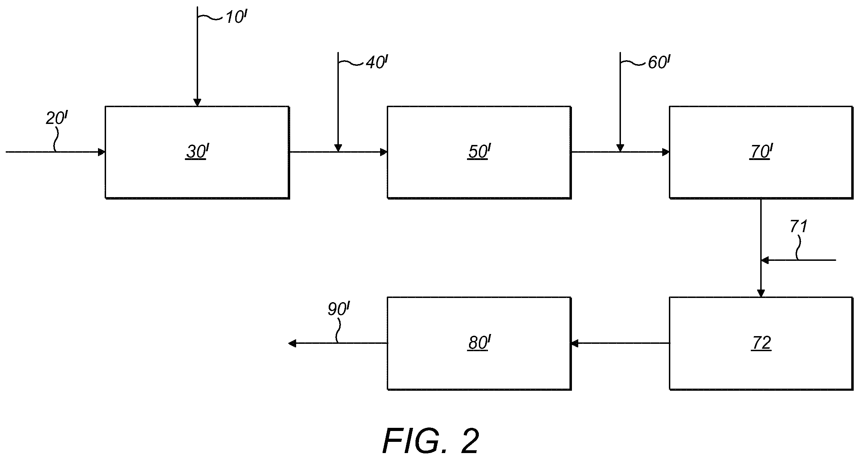

The steps of Figure 2 that are equivalent to those of Figure 1 have a corresponding reference numeral, with an apostrophe (') following the numeral. The method of Figure 2 includes an additional step of adding short chain inulin fibres 71 after the micellar casein 60' is added and mixed with the other ingredients. The composition after addition of the short chain inulin fibre 71 is mixed for 10 minutes at 60°C in the Thermomixer 72, before it is then spray-dried 80' to provide the final creamer powder composition 90'.

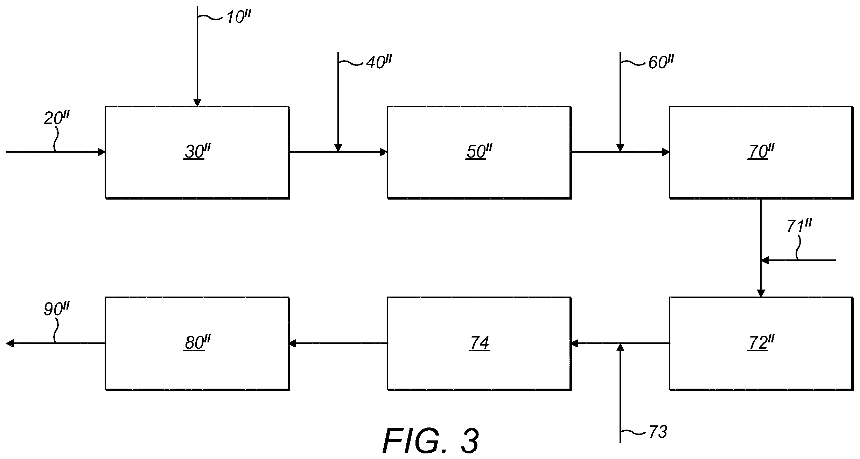

The steps of Figure 3 that are equivalent to those of figure 2 are denoted with two apostrophes ("). After addition of the short chain inulin fibre 71" and mixing thereof 72", corn fibre syrup 73 is added to the mixture and subsequently mixed in the thermomixer 74 for a further 10 minutes, before being spray-dried 80" to provide the final creamer powder composition 90".

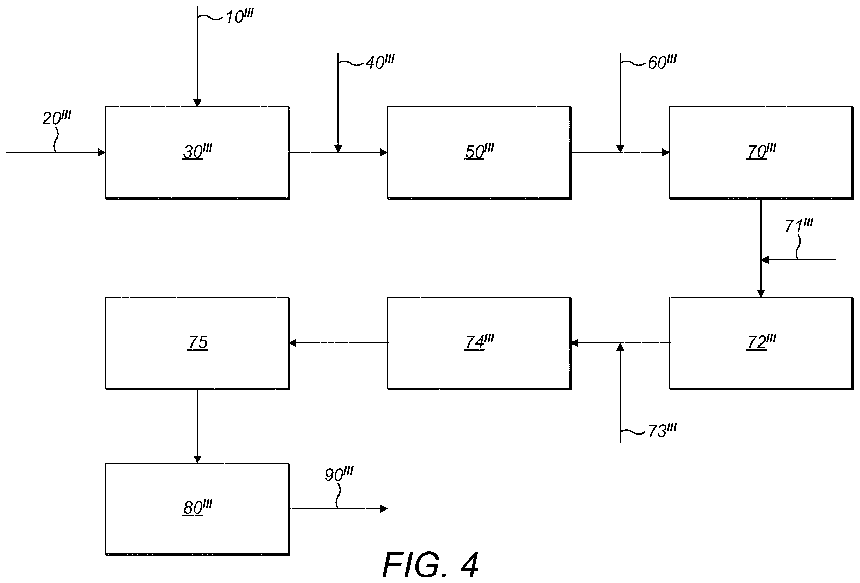

The steps of Figure 4 that are equivalent to the relevant steps of figure 3 are denoted with three apostrophes ("'). After the addition of the corn fibre syrup 73"', and subsequent mixing thereof 74"', the mixture is sent to a high-shearing machine 75, where the mixture is sheared at 7000rpm for 3 minutes at 60°C, after which it is spray-dried 80‴ to provide the final powder creamer 90‴.

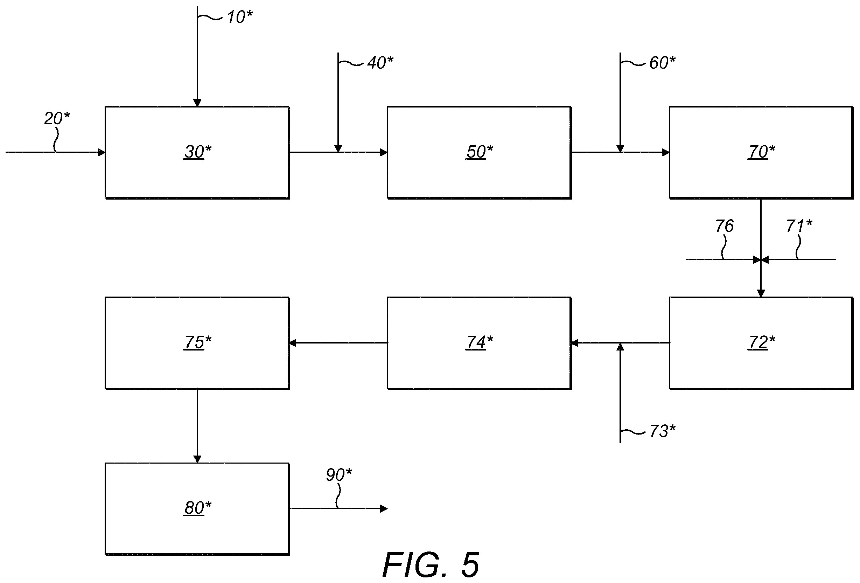

The steps of Figure 5 that are equivalent to the relevant steps of figure 4 are denoted with an asterisk (*). At the same time as adding the short chain inulin fibre 71*, fructooligosaccharides (FOS) 76 are added. The composition is then subjected to the following steps of mixing 72*, addition of the corn fibre syrup 73*, subsequent mixing 74*, shearing 75*, and spray-drying 80* to form the final creamer powder composition 90*.

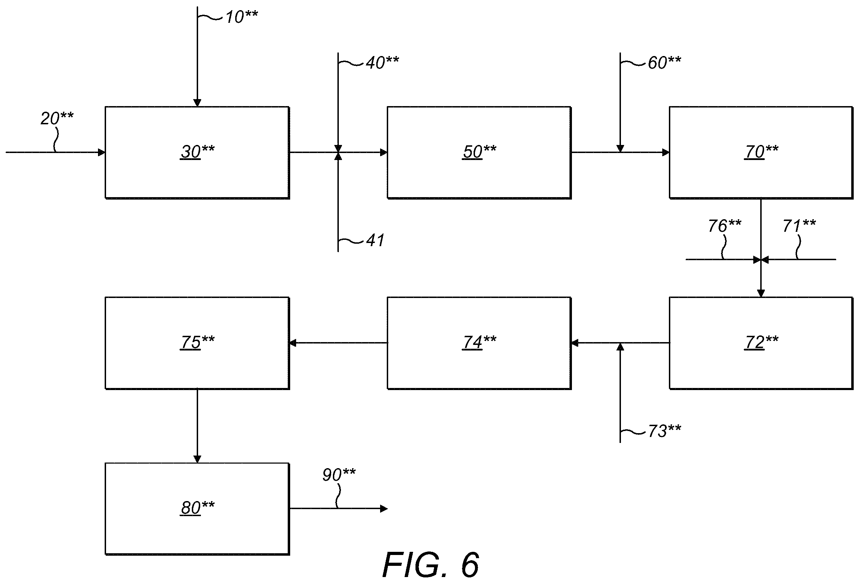

The steps of Figure 6 that are equivalent to the relevant steps of figure 5 are denoted with two asterisks (**). At the same time as adding the micellar casein 40**, sodium caseinate 41 is added. The composition is then subjected to the following steps of mixing 50**, 70**, 72**, addition of the corn fibre syrup 73**, subsequent mixing 74**, shearing 75**, and spray-drying 80** to form the final creamer powder composition 90**.

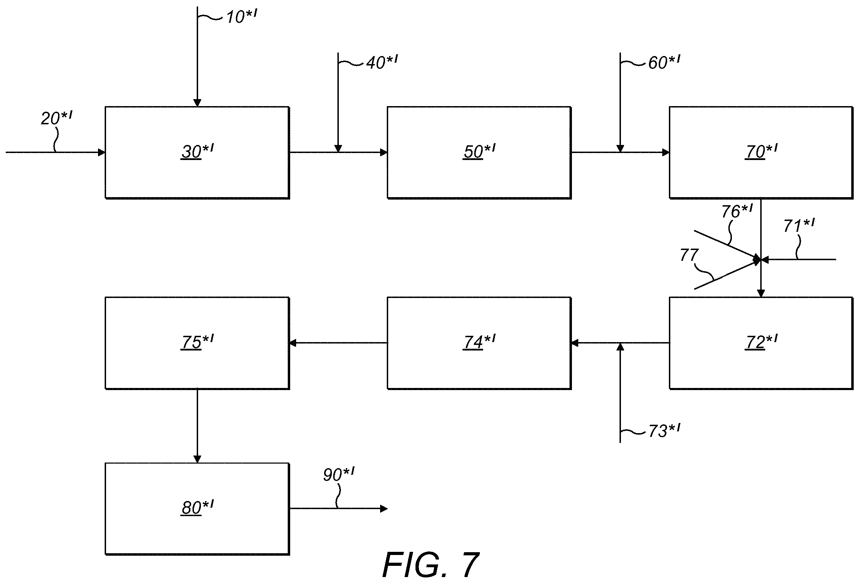

The steps of Figure 7 that are equivalent to the relevant steps of figure 5 are denoted with an asterisk and an apostrophe (*'). At the same time as adding the short chain inulin fibre 71*', fructooligosaccharides (FOS) 76*' and oat starch 77 are added. The composition is then subjected to the following steps of mixing 72*', addition of the corn fibre syrup 73*', subsequent mixing 74*', shearing 75*', and spray-drying 80*' to form the final creamer powder composition 90*'.

### Examples

### Inventive Example 1

A non-fat powder creamer was made according to the invention, with components in the following amounts:

**Table 1**

| **Components of creamer composition** | **Weight percent without water (i.e. weight percent of dried composition)** |
|---|---|
| Corn fibre syrup | 35-45% |
| FOS | 0-15% |
| Long chain inulin | 5-15% |
| Short chain inulin | 20-30% |
| Solmiko MPI (micellar casein) | 5-20% |
| Additives (i.e. stabilisers and buffers) | 0-5% |

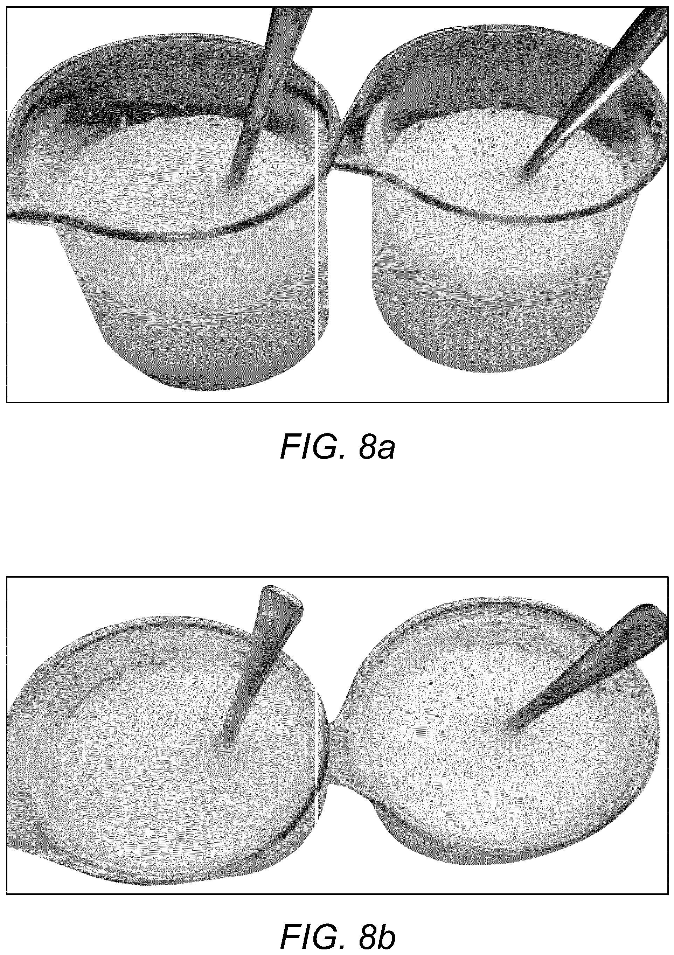

A reference creamer powder and the inventive creamer powder were reconstituted with water to form a slurry of the creamer. This is shown in Figures 8a and 8b, where the non-fat creamer according to the invention (i.e. IE1) has been reconstituted with water and the resulting slurry is shown in the beaker at the left. A reference commercially-used creamer composition (CE1) having fat was reconstituted with water and the resulting creamer is shown in the beaker at the right hand side. The CE1 creamer has approximately 50 wt.% fat, by dry weight.

As shown, both the non-fat creamer and the commercially-used comparative creamer display good whiteness and a smooth texture.

### Inventive Example 2

A creamer powder having components in amounts consistent with Table 1 was reconstituted with water to form a slurry of the creamer (IE2).

A comparative creamer powder was then made, having between 20 and 65 wt.% fat by dry weight, and then reconstituted with water to form a slurry of the creamer (CE2).

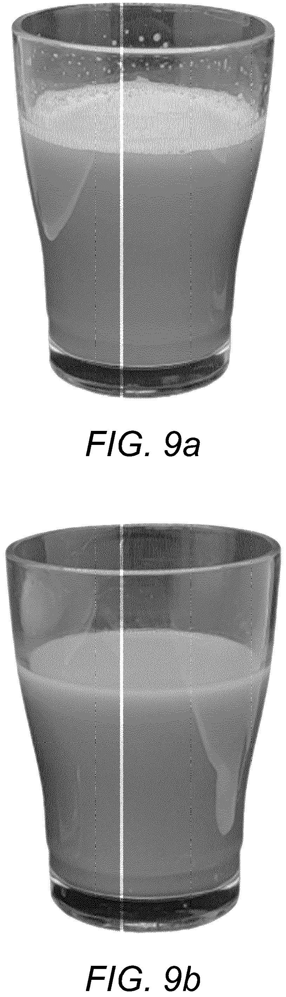

IE2 and CE2 were then each added to an aqueous coffee extract in a 2 in 1 amount. Figure 9a shows the appearance of a coffee beverage immediately after addition of IE2 slurry creamer to the black coffee extract, and Figure 9b shows the appearance of a coffee beverage immediately after addition of CE2 slurry creamer to the black coffee extract.

As can be seen, the 0% fat IE2 creamer produces a coffee with good whiteness. The whiteness of said coffee having the IE2 creamer is at least comparable (i.e. very similar) to the whiteness of a coffee beverage that contains the comparative creamer slurry CE2.

### Inventive Example 3

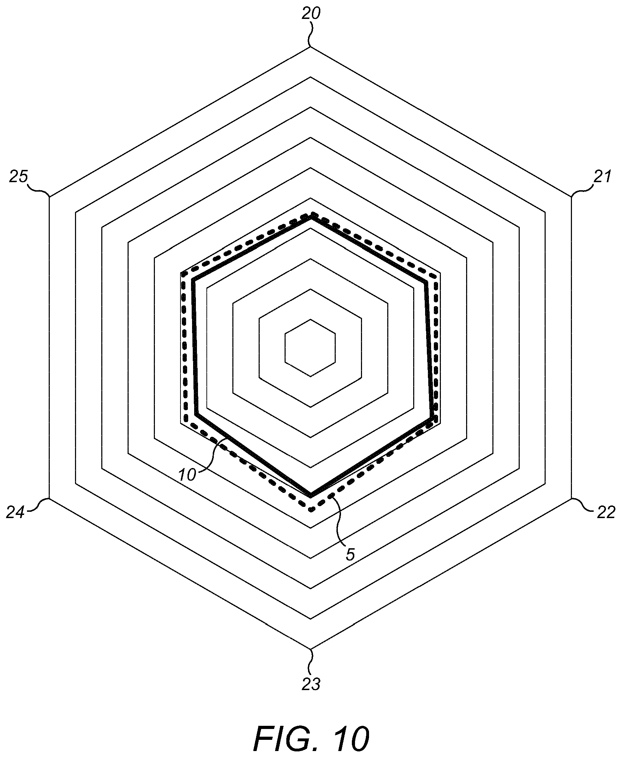

The coffee beverages containing IE2 or CE2 (that were produced in Example 2) were then each tasted by participants, and their sensory profiles were rated. These the average scores of these ratings are displayed on the chart shown in Figure 10. In particular, the average scores of the coffee beverage containing CE2 5 are shown on the same chart as the average scores of the coffee beverage containing IE2 10. The scores are depicted for the following properties:
- Coffee intensity 20;
- Colour 21;
- Opacity 22;
- Mouthfeel 23;
- Milkiness 24; and
- Sweetness 25.

As can be seen, the sensory profile of a coffee beverage containing IE2 is very similar to that of a coffee beverage containing CE2. Therefore, the inventive fat-free creamer powder represents an ideal replacement for (or alternative to) fat-containing creamer powders.

### Inventive Example 4

A non-fat powder creamer was made according to the invention (IE3), with components in the following amounts:

**Table 2**

| **Components of reference creamer composition** | **Weight percent without water (i.e. weight percent of dried composition)** |
|---|---|
| Corn fibre syrup | 35-45% |
| FOS | 0-8% |
| Long chain inulin | 5-15% |
| Short chain inulin | 20-30% |
| Solmiko MPI (micellar casein) | 5-20% |
| Additives (i.e. stabilisers and buffers) | 0-5% |
| BevOat (oat starch) | 5-10% |

A reference commercially-used creamer composition (CE1) having fat was reconstituted with water and the inventive creamer powder (IE3) were reconstituted with water to form a slurry of the creamer. The inventive creamer slurry (IE3) was sampled by a number of participants, and compared to the CE1. It was found that IE3 had a similar taste, appearance and mouthfeel to that of CE1.

### Example 5

A non-fat powder creamer was made (IE4), with components in the following amounts:

**Table 3**

| **Components of reference creamer composition** | **Weight percent without water (i.e. weight percent of dried composition)** |
|---|---|
| Corn fibre syrup | 35-45% |
| FOS | 0-15% |
| Long chain inulin | 5-15% |
| Short chain inulin | 20-30% |
| Solmiko MPI (micellar casein) | 4-10% |
| Additives (i.e. stabilisers and buffers) | 0-5% |
| Excellion EM7 (Sodium caseinate) | 2-6% |

A reference commercially-used creamer composition (CE1) having fat was reconstituted with water and the creamer powder (IE4) were reconstituted with water to form a slurry of the creamer. The creamer slurry (IE4) was sampled by a number of participants, and compared to CE1. It was found that IE4 had a good taste, stability and mouthfeel, comparable to that of CE1.

As used herein, the singular form of "a", "an" and "the" include plural references unless the context clearly dictates otherwise. The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise. Percentages are by weight, in particular, by dry weight of the composition, unless indicated to the contrary.

The foregoing detailed description has been provided by way of explanation and illustration, and is not intended to limit the scope of the appended claims. Many variations of the presently preferred embodiments illustrated herein will be apparent to one of ordinary skill in the art, and remain within the scope of the appended claims.

## Claims

1. A non-fat creamer powder having less than 1wt% fat comprising:
5 to 15wt% of hydrothermally treated long chain fibre inulin having a chain length of from 14 to 60;
5 to 20wt% micellar casein,
15 to 40wt%, by weight of the non-fat creamer powder, of short chain fibre inulin having a chain length of from 10 to 12, and
20 to 50wt%, by weight of the non-fat creamer powder, of corn fibre syrup.

2. The non-fat creamer powder according to claim 1, wherein the powder comprises 2 to 20wt%, by weight of the non-fat creamer powder, of fructo-oligosaccharides (FOS).

3. The non-fat creamer powder according to claim 1 or claim 2, further comprising oat starch, preferably in an amount of from 3 to 15wt%, by weight of the non-fat creamer powder.

4. The non-fat creamer powder according to any preceding claim, further comprising sodium caseinate, preferably in an amount of from 1 to 8wt%, by weight of the non-fat creamer powder.

5. The non-fat creamer powder according to any of claims 1 to 3 which is free from:
(i) sodium caseinate; and/or
(ii) colours, preservatives and stabilisers; and/or
(iii) added fructose, sucrose or glucose.

6. A coffee beverage powder comprising the non-fat creamer powder according to any preceding claim and a coffee powder.

7. A method for the manufacture of a non-fat creamer powder having less than 1wt% fat, the method comprising:
(i) mixing together water and long chain fibre inulin having a chain length of from 14 to 60 at a temperature of from 50ºC to 70ºC for a time sufficient to at least partially swell the long chain fibre inulin and form a first mixture;
(ii) adding with mixing micellar casein to form a second mixture;
(iii) adding with mixing the balance comprising sweetening and/or bulking agents to form a third mixture; and
(iv) spray-drying the third mixture to form the non-fat creamer powder.

8. The method according to claim 7, wherein the balance comprises short chain fibre inulin having a chain length of from 10 to 12, and corn fibre syrup, wherein the method further comprises adding with mixing the short chain fibre inulin before adding with mixing the corn fibre syrup.

9. The method according to claim 8 for the manufacture of the non-fat creamer powder according to any of claims 1 to 5.

10. The method according to any of claims 7 to 9, wherein steps (ii) and (iii) are conducted at a temperature of from 50ºC to 70ºC.

11. The method according to any of claims 7 to 10, wherein step (i) and preferably steps (ii) and (iii) are conducted at a temperature of about 60ºC.

12. The method according to any of claims 7 to 11, wherein the mixing is performed with a high-shear mixer.

13. The method according to any of claims 7 to 12, wherein step (ii) and/or step (iii) further includes adding with mixing sodium caseinate and/or oat starch.

14. Use of the non-fat creamer powder according to any of claims 1 to 5 for forming a whitened beverage on reconstitution in water.

## Patentansprüche

1. Fettfreies Kaffeeweißer-Pulver, das weniger als 1 Gew.-% Fett aufweist, umfassend:
zu 5 bis 15 Gew.-% hydrothermal behandeltes langkettiges Faserinulin, das eine Kettenlänge von 14 bis 60 aufweist;
zu 5 bis 20 Gew.-% mizellares Casein,
zu 15 bis 40 Gew.-%, bezogen auf das Gewicht des fettfreien Kaffeeweißer-Pulvers, kurzkettiges Faserinulin, das eine Kettenlänge von 10 bis 12 aufweist, und
zu 20 bis 50 Gew.-%, bezogen auf das Gewicht des fettfreien Kaffeeweißer-Pulvers, Maisfasersirup.

2. Fettfreies Kaffeeweißer-Pulver nach Anspruch 1, wobei das Pulver zu 2 bis 20 Gew.-%, bezogen auf das Gewicht des fettfreien Kaffeeweißer-Pulvers, Fructo-Oligosaccharide (FOS) umfasst.

3. Fettfreies Kaffeeweißer-Pulver nach Anspruch 1 oder 2, ferner umfassend Haferstärke, vorzugsweise in einer Menge von 3 bis 15 Gew.-%, bezogen auf das Gewicht des fettfreien Kaffeeweißer-Pulvers.

4. Fettfreies Kaffeeweißer-Pulver nach einem der vorstehenden Ansprüche, ferner umfassend Natriumcaseinat, vorzugsweise in einer Menge von 1 bis 8 Gew.-%, bezogen auf das Gewicht des fettfreien Kaffeeweißer-Pulvers.

5. Fettfreies Kaffeeweißer-Pulver nach einem der Ansprüche 1 bis 3, das frei ist von:
(i) Natriumcaseinat; und/oder
(ii) Farbstoffen, Konservierungsmitteln und Stabilisatoren; und/oder
(iii) zugesetzte Fructose, Saccharose oder Glucose.

6. Kaffeegetränkpulver, umfassend das fettfreie Kaffeeweißer-Pulver nach einem der vorstehenden Ansprüche und ein Kaffeepulver.

7. Verfahren zum Herstellen eines fettfreien Kaffeeweißer-Pulvers, das weniger als 1 Gew.-% Fett aufweist, das Verfahren umfassend:
(i) Zusammenmischen von Wasser und langkettigem Faserinulin, das eine Kettenlänge von 14 bis 60 bei einer Temperatur von 50 ºC bis 70 ºC für eine Zeit aufweist, die ausreicht, um das langkettige Faserinulin mindestens teilweise quellen zu lassen und eine erste Mischung auszubilden;
(ii) Zugeben unter Mischen von mizellarem Casein, um eine zweite Mischung auszubilden;
(iii) Zugeben unter Mischen des Rests, umfassend Süßungs- und/oder Füllstoffe, um eine dritte Mischung auszubilden; und
(iv) Sprühtrocknen der dritten Mischung, um das fettfreie Kaffeeweißer-Pulver auszubilden.

8. Verfahren nach Anspruch 7, wobei der Rest kurzkettiges Faserinulin, das eine Kettenlänge von 10 bis 12 aufweist, und Maisfasersirup umfasst, wobei das Verfahren ferner das Zugeben unter Mischen des kurzkettigen Faserinulins vor dem Zugeben unter Mischen des Maisfasersirups umfasst.

9. Verfahren nach Anspruch 8 zum Herstellen des fettfreien Kaffeeweißer-Pulvers nach einem der Ansprüche 1 bis 5.

10. Verfahren nach einem der Ansprüche 7 bis 9, wobei die Schritte (ii) und (iii) bei einer Temperatur von 50 ºC bis 70 ºC vorgenommen werden.

11. Verfahren nach einem der Ansprüche 7 bis 10, wobei Schritt (i) und vorzugsweise Schritte (ii) und (iii) bei einer Temperatur von etwa 60 ºC vorgenommen werden.

12. Verfahren nach einem der Ansprüche 7 bis 11, wobei das Mischen mit einem Hochschermischer durchgeführt wird.

13. Verfahren nach einem der Ansprüche 7 bis 12, wobei Schritt (ii) und/oder Schritt (iii) ferner das Zugeben unter Mischen von Natriumcaseinat und/oder Haferstärke einschließt.

14. Verwendung des fettfreien Kaffeeweißer-Pulvers nach einem der Ansprüche 1 bis 5 zum Ausbilden eines weiß gemachten Getränks bei Rückbildung einer kristallographischen Phase in Wasser.

## Revendications

1. Poudre de succédané de crème non grasse ayant moins de 1 % en poids de matières grasses comprenant :
5 à 15 % en poids d'inuline de fibre à chaîne longue traitée par voie hydrothermique ayant une longueur de chaîne allant de 14 à 60 ;
5 à 20 % en poids de caséine micellaire,
15 à 40 % en poids, par rapport au poids de la poudre de succédané de crème non grasse, d'inuline de fibre à chaîne courte ayant une longueur de chaîne allant de 10 à 12, et
20 à 50 % en poids, par rapport au poids de la poudre de succédané de crème non grasse, de sirop de fibre de maïs.

2. Poudre de succédané de crème non grasse selon la revendication 1, dans laquelle la poudre comprend de 2 à 20 % en poids, par rapport au poids de la poudre de succédané de crème non grasse, de fructo-oligosaccharides (FOS).

3. Poudre de succédané de crème non grasse selon la revendication 1 ou la revendication 2, comprenant en outre de l'amidon d'avoine, de préférence en une quantité allant de 3 à 15 % en poids, par rapport au poids de succédané de crème non grasse.

4. Poudre de succédané de crème non grasse selon l'une quelconque revendication précédente, comprenant en outre du caséinate de sodium, de préférence en une quantité allant de 1 à 8 % en poids, par rapport au poids de la poudre de succédané de crème non grasse.

5. Poudre de succédané de crème non grasse selon l'une quelconque des revendications 1 à 3, qui est dépourvue de :
(i) caséinate de sodium ; et/ou
(ii) colorants, conservateurs et stabilisants ; et/ou
(iii) fructose, saccharose ou glucose ajoutés.

6. Poudre de boisson au café comprenant la poudre de succédané de crème non grasse selon l'une quelconque revendication précédente et une poudre de café.

7. Procédé pour la fabrication d'une poudre de succédané de crème non grasse ayant moins de 1 % en poids de matières grasses, le procédé comprenant :
(i) le mélange d'eau et d'inuline de fibre à chaîne longue ayant une longueur de chaîne allant de 14 à 60 à une température de 50 ºC à 70 ºC pendant une durée suffisante pour faire gonfler au moins partiellement l'inuline de fibre à chaîne longue et former un premier mélange ;
(ii) l'ajout, tout en mélangeant, de caséine micellaire pour former un deuxième mélange ;
(iii) l'ajout, tout en mélangeant, du reste comprenant des agents édulcorants et/ou de charge pour former un troisième mélange ; et
(iv) le séchage par atomisation du troisième mélange pour former la poudre de succédané de crème non grasse.

8. Procédé selon la revendication 7, dans lequel le reste comprend de l'inuline de fibre à chaîne courte ayant une longueur de chaîne allant de 10 à 12, et du sirop de fibre de maïs, dans lequel le procédé comprend en outre l'ajout, tout en mélangeant, de l'inuline de fibre à chaîne courte avant l'ajout tout en mélangeant du sirop de fibre de maïs.

9. Procédé selon la revendication 8 pour la fabrication de la poudre de succédané de crème non grasse selon l'une quelconque des revendications 1 à 5.

10. Procédé selon l'une quelconque des revendications 7 à 9, dans lequel les étapes (ii) et (iii) sont réalisées à une température allant de 50 ºC à 70 ºC.

11. Procédé selon l'une quelconque des revendications 7 à 10, dans lequel l'étape (i) et, de préférence, les étapes (ii) et (iii) sont réalisées à une température d'environ 60 ºC.

12. Procédé selon l'une quelconque des revendications 7 à 11, dans lequel le mélange est effectué à l'aide d'un mélangeur à cisaillement élevé.

13. Procédé selon l'une quelconque des revendications 7 à 12, dans lequel l'étape (ii) et/ou l'étape (iii) comportent en outre l'ajout tout en mélangeant de caséinate de sodium et/ou d'amidon d'avoine.

14. Utilisation de la poudre de succédané de crème non grasse selon l'une quelconque des revendications 1 à 5 pour former une boisson blanchie lors d'une reconstitution dans de l'eau.
